(19) Europäisches Patentamt
European Patent Office
Office européen des brevets

(11) **EP 1 951 555 B1**

(12) **EUROPÄISCHE PATENTSCHRIFT**

(45) Veröffentlichungstag und Bekanntmachung des Hinweises auf die Patenterteilung:
**14.11.2018 Patentblatt 2018/46**

(51) Int Cl.:
**B60R 21/00** *(2006.01)*     **B60R 21/013** *(2006.01)*
**B60R 21/0132** *(2006.01)*

(21) Anmeldenummer: **06793862.1**

(22) Anmeldetag: **27.09.2006**

(86) Internationale Anmeldenummer:
**PCT/EP2006/066800**

(87) Internationale Veröffentlichungsnummer:
**WO 2007/054402 (18.05.2007 Gazette 2007/20)**

(54) **VERFAHREN UND VORRICHTUNG ZUR ANSTEUERUNG VON PERSONENSCHUTZMITTELN BEI EINEM ÜBERROLLVORGANG**

METHOD AND DEVICE FOR ACTIVATING PERSONAL PROTECTION MEANS IN THE EVENT OF A ROLLOVER

PROCEDE ET DISPOSITIF POUR COMMANDER DES MOYENS DE PROTECTION DES PERSONNES LORS D'UN CAPOTAGE

(84) Benannte Vertragsstaaten:
**DE ES FR GB IT**

(30) Priorität: **14.11.2005 DE 102005054127**

(43) Veröffentlichungstag der Anmeldung:
**06.08.2008 Patentblatt 2008/32**

(73) Patentinhaber: **ROBERT BOSCH GMBH**
**70442 Stuttgart (DE)**

(72) Erfinder:
• **SCHMID, Michael**
**70806 Kornwestheim (DE)**
• **GOLOMBECK, Marc-Andre**
**70839 Gerlingen (DE)**
• **DENZ, Holger**
**70839 Gerlingen (DE)**

(56) Entgegenhaltungen:
US-A- 5 890 084      US-A1- 2003 065 430
US-A1- 2004 128 060      US-B1- 6 192 305
US-B1- 6 843 538

EP 1 951 555 B1

**Beschreibung**

Stand der Technik

Die Erfindung betrifft ein Verfahren bzw. eine Vorrichtung zur Ansteuerung von Personenschutzmitteln bei einem Überrollvorgang nach der Gattung der unabhängigen Patentansprüche.

Aus DE 10303149 A1 ist es bekannt in Abhängigkeit von verschiedenen fahrdynamischen Größen, wie der Fahrzeugquerbeschleunigung, einer Drehrate und auch einer Fahrzeugschwerpunktsgeschwindigkeit eine Auslöseentscheidung bei einem Überrollvorgang vorzunehmen. Aus dem dabei zitierten Stand der Technik ist es auch bekannt, den Schwimmwinkel für die Entscheidung über die Auslösung von Personenschutzmitteln bei einem Überrollvorgang heranzuziehen.

Aus US 6,192,305 B1 ist bekannt, eine Vorrichtung bzw. ein Verfahren zur Vorhersage eines Überrollvorgangs eines Fahrzeugs. Die Vorrichtung bzw. das Verfahren erfassen eine longitudinale Rollwinkelrate, eine laterale Rollwinkelrate, eine Längsbeschleunigung, eine Querbeschleunigung sowie die Vertikalbeschleunigung des Fahrzeugs und geben entsprechende Signale der erfassten Größen aus. Ein nicht-linearer Filter, wie beispielsweise ein erweiterter Kalman-Filter, berechnet den aktuellen longitudinalen Rollwinkel und den aktuellen lateralen Rollwinkel mit Hilfe einer Funktion aus den erfassten Größen. Ein Schätzmittel schätzt den zukünftigen longitudinalen Rollwinkel mit Hilfe einer Funktion aus dem berechneten, aktuellen longitudinalen Rollwinkel und der erfassten longitudinalen Rollrate und zudem schätzt es den zukünftigen lateralen Rollwinkel mit Hilfe einer Funktion aus dem berechneten, aktuellen lateralen Rollwinkel und der erfassten lateralen Rollrate. Die geschätzten longitudinalen und lateralen Rollwinkel werden mit einem Schwellwert verglichen und ein Fahrzeugüberrollzustandssignal wird ausgegeben um anzuzeigen, dass ein geschätzter Fahrzeugüberrollzustand vorliegt. Zusätzlich werden die gemessenen lateralen und longitudinalen Rollratensignale korrigiert, um einen möglicherweise vorliegenden fahrzeuggierbedingten Fehler zu kompensieren.

Offenbarung der Erfindung

Die erfindungsgemäße Vorrichtung bzw. das erfindungsgemäße Verfahren zur Ansteuerung von Personenschutzmitteln bei einem Überrollvorgang haben dem gegenüber den Vorteil, dass durch die Verwendung der Vorausschätzung von fahrdynamischen Größen sich ein Zeitvorteil ergibt und damit eine bessere Auslöseperformance des Überrolldetektionsalgorithmus. Diese fahrdynamischen Größen werden unmittelbar vor dem Überrollvorgang vorausgeschätzt und können so frühzeitig zur Auslöseentscheidung beitragen. Die Vorausschätzung gelingt aus aktuell ermittelten fahrdynamischen Größen. Dabei müssen die aktuell ermittelten fahrdynamischen Größen und die vorausgeschätzten Größen nicht übereinstimmen. Das heißt es kann beispielsweise die Fahrzeugquergeschwindigkeit aus der Fahrzeugquerbeschleunigung und der Gierrate und dem Schwimmwinkel geschätzt werden. Die Vorausschätzung wird als Modul vorzugsweise in einem Mikrocontroller als der Auswerteschaltung durchgeführt.

Durch die in den abhängigen Ansprüchen aufgeführten Maßnahmen und Weiterbildungen sind vorteilhafte Verbesserungen der in den unabhängigen Patentansprüchen angegebenen Vorrichtung bzw. angegebenen Verfahrens zur Ansteuerung von Personenschutzmitteln bei einem Überrollvorgang möglich.

Gemäß der Erfindung werden aus der Gierrate und dem Schwimmwinkel die Fahrzeugquergeschwindigkeit und der Schwimmwinkel vorausgeschätzt. Diese beiden Größen, die Fahrzeugquergeschwindigkeit und der Schwimmwinkel haben sich als besonders vorteilhaft zur Bildung der Auslöseentscheidung für die Personenschutzmittel gezeigt.

Für die Vorausschätzung kann vorteilhafter Weise auch eine erste Zeitkonstante verwendet werden. Diese Zeitkonstante trägt dabei der Auswirkung der Gierbewegung auf die zukünftige Entwicklung des Schwimmwinkels Rechnung.

Erfindungsgemäß ist es vorteilhaft, dass die Sensorik auch zur Erfassung der Fahrzeugquerbeschleunigung konfiguriert ist. Damit ist dann die Vorausschätzung der Fahrzeugquergeschwindigkeit auch in Abhängigkeit von der Fahrzeugquerbeschleunigung möglich. Dies verbessert die Schätzung, da dadurch insbesondere eine Überschätzung der Fahrzeugquergeschwindigkeit vermieden wird. Alternativ ist es auch möglich eine konstante Beschleunigung zu verwenden. Zusätzlich wird dann auch eine weitere Zeitkonstante verwendet, die die Wirkungsdauer der lateralen Beschleunigung angibt. Alternativ zu der gemessenen Fahrzeugquerbeschleunigung kann auch ein konstanter einstellbarer Wert oder ein Wertebereich oder eine vorgegebene Funktion verwendet werden, die alle unter dem Begriff vorgegebener Wert subsummiert werden.

Zeichnung

Ausführungsbeispiele der Erfindung sind in der Zeichnung dargestellt und werden in der nachfolgenden Beschreibung näher erläutert.

Es zeigen:

Figur 1    ein Blockschaltbild der erfindungsgemäßen Vorrichtung,

Figur 2    ein weiteres Blockschaltbild zum Verfahrensablauf,

Figur 3    ein erstes Flussdiagramm und

Figur 4    ein zweites Flussdiagramm.

Beschreibung

Zahlen aus den USA belegen die Bedeutung der passiven Sicherheit bei Fahrzeugüberschlägen oder Überrollvorgängen:
Im Jahr 1998 war die Hälfte aller tödlichen Einzelfahrzeugunfälle auf einen Überrollvorgang zurückzuführen. Im gesamten Unfallgeschehen nimmt der Überrollvorgang einen Anteil von rund 20 % ein. Erfindungsgemäß wird vorgeschlagen, eine Vorausschätzung von fahrdynamischen Größen vorzunehmen, um einen Zeitvorteil bei solch gefährlichen Unfällen wie dem Überrollvorgang zu gewinnen. Dabei wird die Vorausschätzung anhand von gemessenen fahrdynamischen Größen durchgeführt. Als besonders vorteilhaft haben sich als voraus zu schätzende Größen der Schwimmwinkel und die Fahrzeugquergeschwindigkeit $v_y$ ergeben. Dabei kann der Schwimmwinkel $\beta_{estim}$ mit Hilfe des aktuellen Schwimmwinkels $\beta_{aktuell}$ der aktuellen Gierrate $\omega_{z,aktuell}$ des Fahrzeugs und einer einstellbaren Zeitkonstante $t_{estim}$ vorausgeschätzt werden:

$$\beta_{estim} = \beta_{aktuell} + \omega_{z,aktuell} \cdot t_{estim} \qquad (1)$$

Die Zeitkonstante $t_{estim}$ trägt dabei der Auswirkung der Gierbewegung auf die zukünftige Entwicklung des Schwimmwinkels Rechnung.
Die laterale aktuelle Geschwindigkeit $v_{y,aktuell}$ ergibt sich aus der Schwerpunktsgeschwindigkeit $v_{CM,aktuell}$ des Fahrzeugs zu:

$$v_{y,aktuell} = v_{CM,aktuell} \cdot \sin \beta_{aktuell} \qquad (2)$$

Die Schwerpunktsgeschwindigkeit muss für dieses Verfahren von außen geliefert werden. Idealerweise steht hierfür die Geschwindigkeitsinformation z.B. des ESP-Steuergerätes zur Verfügung. Alternativ dazu kann man sich die Schwerpunktsgeschwindgkeit selbst über Messgrößen berechnen, beispielsweise über die Raddrehzahlen, über GPS-Daten oder über eine optische Sensorik.
Eine Vorausschätzung für $v_{y,estim}$ wäre demnach einfach möglich, wenn man die Vorausschätzung für $\beta_{estim}$ aus Gleichung (1) in Gleichung (2) einsetzt:

$$v_{y,estim} = v_{CM,aktuell} \cdot \sin \beta_{estim} = v_{CM,aktuell} \cdot \sin\left(\beta_{aktuell} + \omega_{z,aktuell} \cdot t_{estim}\right) \qquad (3)$$

Der Nachteil von Gleichung (3) liegt in der Möglichkeit, dass der Schwimmwinkel je nach Wahl der Parameter überschätzt werden kann und dadurch eine zu große zukünftige laterale Geschwindigkeit angenommen werden kann. Um diesem Effekt vorteilhafter Weise entgegen zu wirken, kann die aktuelle Fahrzeugquerbeschleunigung des Kraftfahrzeugs, beispielsweise gemessen von Sensoren im Airbagsteuergerät, oder eine konstante Beschleunigung verwendet werden, deren bremsender Einfluss auf die seitwärtige Bewegung während eines Schleuder- oder Überrollvorgangs des Kraftfahrzeugs einen zukünftigen Abbau der lateralen Geschwindigkeit oder Fahrzeugquergeschwindigkeit zur Folge hat. Gleichung (3) muss dementsprechend um einen $a_{y,aktuell}$-Term für die aktuelle Beschleunigung als auch eine zweite Zeitkonstante $t_{estim2}$, die die Wirkungsdauer der lateralen Beschleunigung angibt, erweitert werden:

$$v_{y,estim} = v_{CM,aktuell} \cdot \sin\left(\beta_{aktuell} + \omega_{z,aktuell} \cdot t_{estim}\right) - a_{y,aktuell} \cdot t_{estim2} \qquad (4)$$

Anstatt der aktuell gemessenen lateralen Beschleunigung $a_y$ kann auch ein konstanter einstellbarer Wert oder ein Wertebereich oder eine vorgegebene Funktion verwendet werden. Dies ist abhängig von der Implementierung und Applikation der vorgestellten Funktionalität.

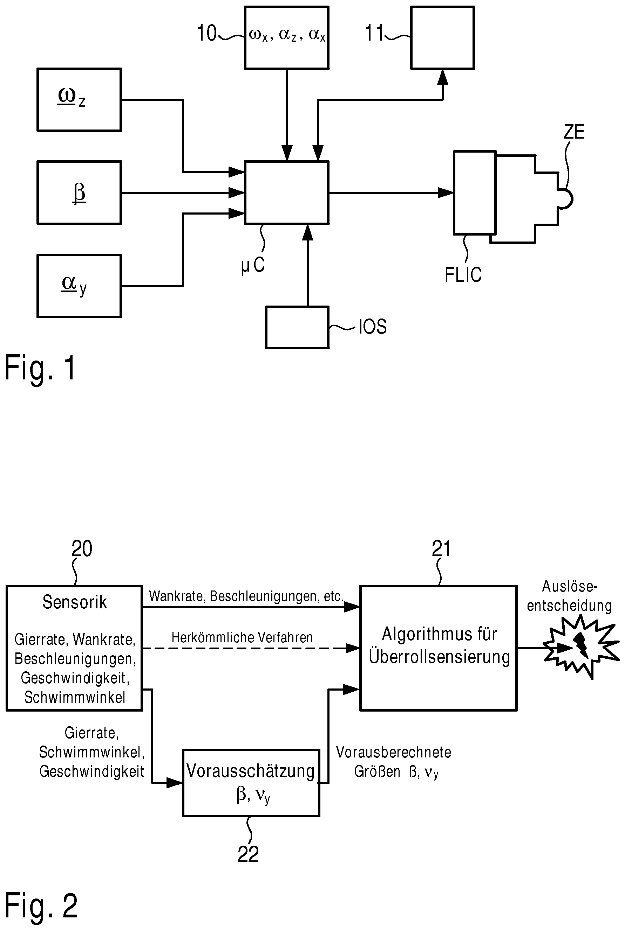

Figur 1 zeigt in einem Blockschaltbild die erfindungsgemäße Vorrichtung. Eine Gierratensensorik $\omega_z$, eine

Schwimmwinkelsensorik $\beta$ und eine Sensorik zur Erfassung der Fahrzeugquerbeschleunigung $a_y$ sowie eine Insassensensorik IOS und eine übrige Sensorik 10 sind jeweils über Dateneingänge an einen Mikrocontroller $\mu C$ als der Auswerteschaltung angeschlossen, der über einen Datenein-/ausgang mit einem Speicher 11 verbunden ist. Über einen Ausgang ist der Mikrocontroller $\mu C$ mit einer Zündkreisansteuerung FLIC verbunden, an die ein Zündelement ZE angeschlossen ist. Die Sensoren können sich innerhalb oder außerhalb des Steuergeräts befinden, in dem sich der Mikrocontroller $\mu C$ und die Zündkreisansteuerung FLIC befinden. Andere Komponenten, die zum Verständnis der Erfindung nicht wesentlich sind aber zu einem Airbagsteuergerät gehören, sind der Einfachheit halber nicht dargestellt. Die Sensoren können beispielsweise in einer Sensorbox als periphere Sensoren oder auch in einem Steuergerät für eine Fahrdynamikregelung angeordnet sein.

Der Mikrocontroller $\mu C$ bestimmt aus den Sensorwerten der Sensoren 10, IOS, $\omega_z$, $\beta$ und $a_y$ die Auslöseentscheidung für das Zündelement ZE. Dazu verwendet der Mikrocontroller $\mu C$ einen Algorithmus, der im Speicher 11 abgelegt ist, wie auch einige voreingestellte Werte. Als Gierratensensor $\omega_z$ kann ein entsprechend konfigurierter Drehratensensor verwendet werden. Es ist auch möglich, aus einer Beschleunigungssensorik die Gierrate abzuleiten. Der Schwimmwinkelsensor $\beta$ oder schwimmwinkelempfindliche Sensor $\beta$ ist entweder ein Sensor, der direkt den Schwimmwinkel erfassen kann, dazu sind beispielsweise optische Sensoren geeignet oder er wird aus den Sensorsignalen von Beschleunigungssensoren oder anderen Sensoren abgeleitet. Die Fahrzeugquerbeschleunigung $a_y$ wird endlich durch eine entsprechend konfigurierte Beschleunigungssensorik erfasst. Auch die Sensorwerte der übrigen Sensoren 10, $\omega_x$, $a_z$ und $a_x$ werden durch Beschleunigungssensoren bzw. Drehratensensoren ermittelt. Als Insassenklassifizierungssensoren IOS kommen beispielsweise Kraftmessbolzen in Frage, die in den Fahrzeugsitz integriert sind. Alternativ sind jedoch auch Videosensoren, Sitzmatten oder andere ähnliche Techniken anwendbar. Bei dem Speicher 11 handelt es sich um beschreibbaren und auch nichtbeschreibbaren Speicher. Im Auslösefall wird das Zündelement ZE durch eine Zündkreisansteuerung FLIC bestromt.

Anhand von Figur 2 wird der erfindungsgemäße Ablauf, den die Vorrichtung gemäß Figur 1 durchläuft, erläutert. Mittels einer Sensorik 20 werden Sensorwerte wie die Gierrate, die Wankrate, die Beschleunigung, die Geschwindigkeit und der Schwimmwinkel erfasst, wobei die Wankrate und Beschleunigung usw. direkt in den Algorithmus 21 für die Überrollsensierung eingehen. Zwischen der Sensorik 20 und dem Algorithmus 21, der auf dem Mikrocontroller $\mu C$ abläuft, ist jedoch ein Modul 22 für eine Vorausschätzung des Schwimmwinkels $\beta$ und der Fahrzeugquergeschwindigkeit $v_y$ vorgesehen. In dieses Modul 22 gehen daher als Eingangswerte die Gierrate $\omega_z$, der Schwimmwinkel $\beta$ und die Geschwindigkeit $v_{CM}$. Daraus wird dann, wie oben dargestellt, der Schwimmwinkel $\beta$ und die Fahrzeugquergeschwindigkeit $v_y$ vorausgeschätzt und diese Werte werden dem Algorithmus 21 zugeführt, sodass dieser unter Berücksichtigung dieser vorausgeschätzten Werte die Auslöseentscheidung treffen kann.

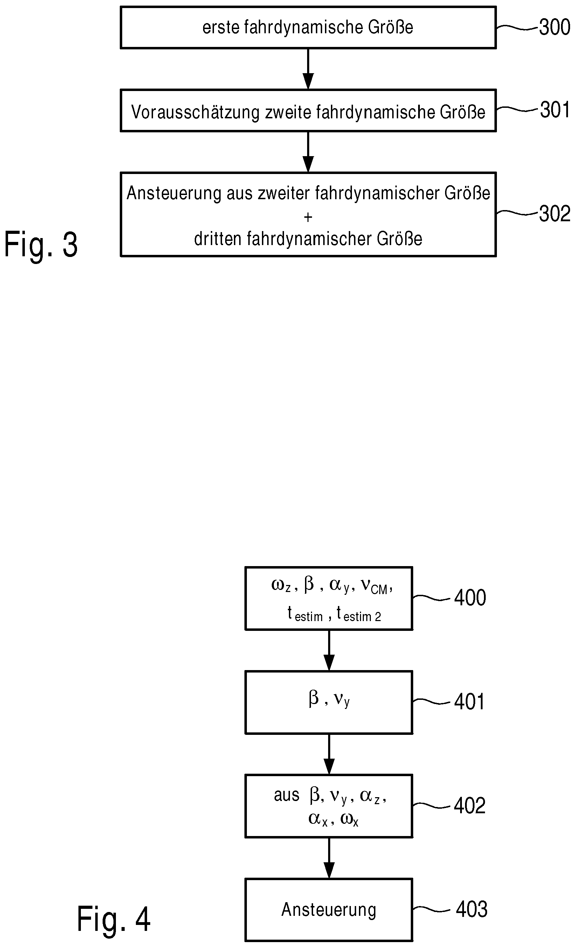

Figur 3 erläutert in einem Flussdiagramm den Ablauf des erfindungsgemäßen Verfahrens. In Verfahrensschritt 300 werden die gemäß den unabhängigen Patentansprüchen angegebenen erste fahrdynamischen Größen ermittelt. Dies ist gemäß Figur 1 beispielsweise die Gierrate $\omega_z$, der Schwimmwinkel $\beta$, die Geschwindigkeit und auch die Fahrzeugquerbeschleunigung $a_y$. In Verfahrensschritt 301 erfolgt mit den oben angegebenen Gleichungen daraus die Vorausschätzung der zweiten fahrdynamischen Größen, also dem Schwimmwinkel $\beta$ und der Fahrzeugquergeschwindigkeit $v_y$. Neben den oben dargestellten Gleichungen sind auch andere Methoden möglich, beispielsweise auch Näherungsverfahren. In Verfahrensschritt 302 wird dann endlich durch den Mikrocontroller $\mu C$ die Ansteuerung aus den zweiten fahrdynamischen Größen und auch weiteren dritten fahrdynamischen Größen, die direkt von der Sensorik in den Algorithmus 21 eingehen, bestimmt. Dazu gehören beispielsweise die Wankrate $\omega_x$ und andere Beschleunigungswerte.

Figur 4 erläutert in einem weiteren Flussdiagramm den Ablauf des erfindungsgemäßen Verfahrens. In Verfahrensschritt 400 werden durch die Sensorik 20 die Gierrate $\omega_z$, der Schwimmwinkel $\beta$, die Fahrzeugquerbeschleunigung $a_y$, die Schwerpunktsgeschwindigkeit $v_{CM}$ und die Zeiten $t_{estim}$ und $t_{estim2}$ bestimmt bzw. aus dem Speicher 11 geladen. Daraus erfolgt dann die Vorausschätzung des Schwimmwinkels $\beta$ und der Fahrzeugquergeschwindigkeit $v_y$ in Verfahrensschritt 401. In Verfahrensschritt 402 erfolgt in Abhängigkeit des Schwimmwinkels $\beta$, der Fahrzeugquergeschwindigkeit $v_y$, der Vertikalbeschleunigung $a_z$ und der Fahrzeugslängsbeschleunigung $a_x$ sowie der Wankrate $\omega_x$ die Bestimmung, ob die Personenschutzmittel angesteuert werden. In Verfahrensschritt 403 erfolgt dann die Ansteuerung.

## Patentansprüche

1. Vorrichtung zur Ansteuerung von Personenschutzmitteln bei einem Überrollvorgang mit

   - einer Sensorik (20), die wenigstens eine erste fahrdynamische Größe ($\omega_z,\beta,a_y,v_{CM}$) ausgibt
   - einer Auswerteschaltung ($\mu C$), die in Abhängigkeit von der wenigstens einen ersten fahrdynamischen Größe ($\omega_z,\beta,a_y,v_{CM}$) wenigstens eine zweite fahrdynamische Größe ($\beta,v_y$) vorausschätzt und in Abhängigkeit von der zweiten fahrdynamischen Größe ($\beta,v_y$) die Personenschutzmittel ansteuert.

**dadurch gekennzeichnet, dass** die Sensorik (20) zur Ausgabe einer Gierrate ($\omega_z$) und eines ersten Schwimmwinkels ($\beta_{aktuell}$) als den ersten fahrdynamischen Größen konfiguriert ist, wobei die Auswerteschaltung ($\mu C$) in Abhängigkeit von der Gierrate ($\omega_z$) und dem ersten Schwimmwinkel ($\beta_{aktuell}$) jeweils eine Fahrzeugquergeschwindigkeit ($v_y$) und einem zweiten Schwimmwinkel ($\beta$) als den zweiten fahrdynamischen Größen vorausschätzt.

**2.** Vorrichtung nach Anspruch 1, **dadurch gekennzeichnet, dass** die Auswerteschaltung ($\mu C$) mit einem Speicher (11) verbunden ist, aus dem die Auswerteschaltung ($\mu C$) eine erste Zeitkonstante ($t_{estim}$) lädt, um mit der ersten Zeitkonstante ($t_{estim}$) die Fahrzeugquergeschwindigkeit ($v_y$) und den zweiten Schwimmwinkel ($\beta$) vorauszuschätzen.

**3.** Vorrichtung nach Anspruch 2, **dadurch gekennzeichnet, dass** die Sensorik (20) zur Erfassung einer Fahrzeugquerbeschleunigung ($a_y$) konfiguriert ist, wobei der Auswerteschaltung ($\mu C$) zur Vorausschätzung der Fahrzeugquergeschwindigkeit ($v_y$) die Fahrzeugquerbeschleunigung ($a_y$) berücksichtigt.

**4.** 3 Vorrichtung nach Anspruch 3, **dadurch gekennzeichnet, dass** die Auswerteschaltung ($\mu C$) aus dem Speicher (11) eine zweite Zeitkonstante Vorrichtung nach Anspruch 4, **dadurch gekennzeichnet, dass** die ($t_{estim2}$) zur Vorausschätzung der Fahrzeugquergeschwindigkeit ($v_y$) lädt.

**5.** Vorrichtung nach Anspruch 2, **dadurch gekennzeichnet, dass** die Auswerteschaltung ($\mu C$) für die Fahrzeugquerbeschleunigung ($a_y$) wenigstens einen vorgegebenen Wert aus dem Speicher (11) lädt.

**6.** Verfahren zur Ansteuerung von Personenschutzmitteln bei einem Überrollvorgang mit folgenden Verfahrensschritten:

- Ermittlung von wenigstens einer fahrdynamischen Größe ($\omega_z, a_y, \beta$)
- Vorausschätzung wenigstens einer zweiten fahrdynamischen Größe ($\beta, V_y$) in Abhängigkeit von der wenigstens einen ersten fahrdynamischen Größe ($\omega_z, \beta_{aktuell}, a_y$)
- Ansteuerung der Personenschutzmittel in Abhängigkeit von der zweiten fahrdynamischen Größe ($\beta, v_y$).

**dadurch gekennzeichnet, dass** als die ersten fahrdynamischen Größen die Gierrate ($\omega_z$) und ein erster Schwimmwinkel ($\beta_{aktuell}$) ermittelt werden und dass aus der Gierrate (($\omega_z$) und dem ersten Schwimmwinkel ($\beta_{aktuell}$) jeweils eine Fahrzeugquergeschwindigkeit ($v_y$) und ein zweiter Schwimmwinkel ($\beta$) als den zweiten fahrdynamischen Größen vorausgeschätzt wird.

**7.** Verfahren nach Anspruch 6, **dadurch gekennzeichnet, dass** zusätzlich eine erste Zeitkonstante ($t_{estim}$) zur Vorausschätzung der Fahrzeugquergeschwindigkeit ($v_y$) und des zweiten Schwimmwinkels ($\beta$) verwendet wird.

**8.** Verfahren nach Anspruch 7, **dadurch gekennzeichnet, dass** zur Vorausschätzung der Fahrzeugquergeschwindigkeit ($v_y$) die Fahrzeugquerbeschleunigung ($a_y$) verwendet wird.

**9.** Verfahren nach Anspruch 8, **dadurch gekennzeichnet, dass** eine zweite Zeitkonstante ($t_{estim2}$) zur Vorausschätzung der Fahrzeugquergeschwindigkeit ($v_y$) verwendet wird.

**10.** Verfahren nach Anspruch 7, **dadurch gekennzeichnet, dass** anstatt der Fahrzeugquerbeschleunigung ($a_y$) wenigstens ein vorgebbarer Wert verwendet wird.

**Claims**

**1.** Device for activating personal protection means in the event of a rollover, comprising

- a sensor system (20) which outputs at least a first vehicle movement dynamics variable ($\omega_z, \beta, \alpha_y, v_{CM}$)
- an evaluation circuit ($\mu C$) which pre-estimates at least one second vehicle movement dynamics variable ($\beta, v_y$) as a function of the at least one first vehicle movement dynamics variable ($\omega_z, \beta, \alpha_y, v_{CM}$), and actuates the personal protection means as a function of the secondary vehicle movement dynamics variable ($\beta, v_y$), **characterized in that** the sensor system (20) is configured to output a yaw rate ($\omega_z$) and a first side slip angle ($\beta_{aktuell}$) as the first vehicle movement dynamics variables, wherein the evaluation circuit ($\mu C$) pre-estimates

in each case a vehicle lateral speed ($v_y$) and a second side slip angle ($\beta$) as the second vehicle movement dynamics variables as a function of the yaw rate ($\omega_z$) and the first side slip angle ($\beta_{aktuell}$).

2. Device according to Claim 1, **characterized in that** the evaluation unit ($\mu C$) is connected to a memory (11) from which the evaluation circuit ($\mu C$) loads a first time constant ($t_{estim}$) in order to pre-estimate the vehicle lateral speed ($v_y$) and the second side slip angle ($\beta$) with the first time constant ($t_{estim}$).

3. Device according to Claim 2, **characterized in that** the sensor system (20) is configured to acquire a vehicle lateral acceleration ($\alpha_y$), wherein the evaluation circuit ($\mu C$) takes into account the vehicle lateral acceleration ($\alpha_y$) in estimating the vehicle lateral speed ($v_y$).

4. Device according to Claim 3, **characterized in that** the evaluation circuit ($\mu C$) loads a second time constant ($t_{estim2}$) for pre-estimating the vehicle lateral speed ($v_y$) from the memory (11).

5. Device according to Claim 2,
**characterized in that** the evaluation circuit ($\mu C$) loads at least one predefined value for the vehicle lateral acceleration ($\alpha_y$) from the memory (11) .

6. Method for actuating personal protection means in the event of a rollover, comprising the following method steps:

   - determining at least one vehicle movement dynamics variable ($\omega_z$, $\alpha_y$, $\beta$)
   - pre-estimating at least one second vehicle movement dynamics variable ($\beta$, $v_y$) as a function of the at least one first vehicle movement dynamics variable ($\omega_z$, $\beta_{aktuell}$, $\alpha_y$), and
   - actuating the personal protection means as a function of the second vehicle movement dynamics variable ($\beta$, $v_y$),

   **characterized in that** the yaw rate ($\omega_z$) and a first side slip angle ($\beta_{aktuell}$) are acquired as the first vehicle movement dynamics variables, and **in that** in each case a vehicle lateral speed ($v_y$) and a second side slip angle ($\beta$) are pre-estimated as the second vehicle movement dynamics variables from the yaw rate ($\omega_z$) and the first side slip angle ($\beta_{aktuell}$).

7. Method according to Claim 6, **characterized in that** in addition a first time constant ($t_{estim}$) is used for pre-estimating the vehicle lateral speed ($v_y$) and the second side slip angle ($\beta$).

8. Method according to Claim 7,
**characterized in that** the vehicle lateral acceleration ($\alpha_y$) is used to pre-estimate the vehicle lateral speed ($v_y$).

9. Method according to Claim 8, **characterized in that** a second time constant (testing) is used to pre-estimate the vehicle lateral speed ($v_y$).

10. Method according to Claim 7, **characterized in that** at least one predefinable value is used instead of the vehicle lateral acceleration ($\alpha_y$).

**Revendications**

1. Dispositif, destiné à actionner des moyens de protection des personnes lors d'un tonneau, comportant :
   - un ensemble de capteurs (20), qui délivre au moins une première grandeur dynamique de conduite ($\varpi_z$, $\beta$, $a_y$, $v_{CM}$) ;
   - un circuit d'évaluation ($\mu C$), qui en fonction de l'au moins une première grandeur dynamique de conduite ($\varpi_z$, $\beta$, $a_y$, $v_{CM}$) pré-estime au moins une deuxième grandeur dynamique de conduite ($\beta$, $v_y$) et en fonction de la deuxième grandeur dynamique de conduite ($\beta$, $v_y$), active les moyens de protection des personnes,

   **caractérisé en ce que** l'ensemble de capteurs (20) est configuré pour délivrer un taux de lacets ($\varpi_z$) et un premier angle de flottement ($\beta_{aktuell}$) au titre de premières grandeurs dynamiques de conduite, en fonction du taux de lacets ($\varpi_z$) et du premier angle de flottement ($\beta_{aktuell}$), le circuit d'évaluation ($\mu C$) pré-estimant chaque fois une vitesse transversale du véhicule ($v_y$) et un deuxième angle de flottement ($\beta$) au titre de deuxièmes grandeurs dynamiques de conduite.

2. Dispositif selon la revendication 1, **caractérisé en ce que** le circuit d'évaluation ($\mu C$) est relié avec une mémoire (11) à partir de laquelle le circuit d'évaluation ($\mu C$) charge une première constante de temps ($t_{estim}$), pour pré-estimer à l'aide de la première constante de temps ($t_{estim}$) la vitesse transversale du véhicule ($v_y$) et le deuxième angle de flottement ($\beta$).

3. Dispositif selon la revendication 2, **caractérisé en ce que** l'ensemble de capteurs (20) est configuré pour détecter une accélération transversale du véhicule ($a_y$), pour pré-estimer la vitesse transversale du véhicule ($v_y$), le circuit d'évaluation ($\mu C$) prenant en considération l'accélération transversale du véhicule ($a_y$).

4. Dispositif selon la revendication 3, **caractérisé en ce que** le circuit d'évaluation ($\mu C$) charge à partir de la mémoire (11) une deuxième constante de temps ($t_{estim2}$) pour pré-estimer la vitesse transversale du véhicule ($v_y$).

5. Dispositif selon la revendication 2, **caractérisé en ce que** pour l'accélération transversale du véhicule ($a_y$), le circuit d'évaluation ($\mu C$) charge au moins une valeur prédéfinie à partir de la mémoire (11).

6. Procédé, destiné à actionner des moyens de protection des personnes lors d'un tonneau, comportant les étapes de procédé suivantes, consistant à :
    - déterminer au moins une grandeur dynamique de conduite ($\varpi_z$, $a_y$, $\beta$),
    - pré-estimer au moins une deuxième grandeur dynamique de conduite ($\beta$, $v_y$) en fonction de l'au moins une première grandeur dynamique de conduite ($\varpi_z$, $\beta_{aktuell}$, $a_y$),
    - activer les moyens de protection des personnes en fonction de la deuxième grandeur dynamique de conduite ($\beta$, $v_y$),

    **caractérisé en ce qu'**au titre de premières grandeurs dynamiques de conduite, le taux de lacets ($\varpi_z$) et un premier angle de flottement ($\beta_{aktuell}$) sont déterminés et **en ce qu'**à partir du taux de lacets ($\varpi_z$) et du premier angle de flottement ($\beta_{aktuell}$), chaque fois une vitesse transversale du véhicule ($v_y$) et un deuxième angle de flottement ($\beta$) sont pré-estimés, au titre de deuxièmes grandeurs dynamiques de conduite.

7. Procédé selon la revendication 6, **caractérisé en ce qu'**une première constante de temps ($t_{estim}$) est utilisée en supplément pour pré-estimer la vitesse transversale du véhicule ($v_y$) et le deuxième angle de flottement ($\beta$).

8. Procédé selon la revendication 7, **caractérisé en ce que** l'accélération transversale du véhicule ($a_y$) est utilisée pour pré-estimer la vitesse transversale du véhicule ($v_y$).

9. Procédé selon la revendication 8, **caractérisé en ce qu'**une deuxième constante de temps ($t_{estim2}$) est utilisée pour pré-estimer la vitesse transversale du véhicule ($v_y$).

10. Procédé selon la revendication 7, **caractérisé en ce qu'**au lieu de l'accélération transversale du véhicule ($a_y$) au moins une valeur prédéfinissable est utilisée.

$10 \sim$ | $\omega_x, \alpha_z, \alpha_x$ | $11 \sim$ | |

$\underline{\omega}_z$

$\underline{\beta}$

$\underline{\alpha}_y$

$\mu C$

ZE

FLIC

IOS

## Fig. 1

$20$

**Sensorik**

Gierrate, Wankrate,
Beschleunigungen,
Geschwindigkeit,
Schwimmwinkel

Wankrate, Beschleunigungen, etc.

Herkömmliche Verfahren

$21$

Auslöseentscheidung

**Algorithmus für
Überrollsensierung**

Gierrate,
Schwimmwinkel,
Geschwindigkeit

**Vorausschätzung
$\beta, \nu_y$**

Vorausberechnete
Größen $\beta, \nu_y$

$22$

## Fig. 2

| erste fahrdynamische Größe | —300 |

↓

| Vorausschätzung zweite fahrdynamische Größe | —301 |

↓

| Ansteuerung aus zweiter fahrdynamischer Größe<br>+<br>dritten fahrdynamischer Größe | —302 |

**Fig. 3**

| $\omega_z$ , $\beta$ , $\alpha_y$, $v_{CM}$,<br>$t_{estim}$ , $t_{estim\,2}$ | —400 |

↓

| $\beta$ , $v_y$ | —401 |

↓

| aus $\beta$, $v_y$, $\alpha_z$,<br>$\alpha_x$ , $\omega_x$ | —402 |

↓

| Ansteuerung | —403 |

**Fig. 4**

**EP 1 951 555 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10303149 A1
- US 6192305 B1